# FASCICULE DE BREVET EUROPEEN

(11) **EP 0 735 803 B1**
(45) Date de publication et mention de la délivrance du brevet: **29.12.1999**
(21) Numéro de dépôt: 96400641.5
(22) Date de dépôt: 27.03.1996
(51) Int. Cl.: H05B 41/38, H05B 41/29

(54) **Convertisseur de tension pour lampe à décharge de projecteur de véhicule automobile, circuit d'alimentation et projecteur le comportant**
Spannungswandler für einem Fahrzeugscheinwerfer, Fahrzeugscheinwerfer mit solch einer Schaltung
Voltage converter for a vehicle headlight discharge lamp, headlight with such a circuit

(30) Priorité: 29.03.1995 FR 9503719
(43) Date de publication de la demande: 02.10.1996
(73) Titulaire: VALEO ELECTRONIQUE, 94000 Creteil (FR)
(72) Inventeur: Cassese, Bruno, 94000 Creteil (FR); Wacheux, Patrick, 94800 Villejuif (FR); Paul, Gilles, 92260 Fontenay aux Roses (FR); Herzberger, Eric, 93220 Gagny (FR); Nicolai, Jean-Marc, 92400 Courbevoie (FR)
(74) Mandataire: Le Forestier, Eric

(56) Documents cités:
- EP-A- 0 601 874
- DE-A- 4 134 101

## Description

La présente invention est relative aux convertisseurs de tension pour lampes à décharge de projecteur de véhicule automobile, ainsi qu'aux circuits d'alimentation les comportant.

Elle concerne également des projecteurs comportant de tels convertisseurs.

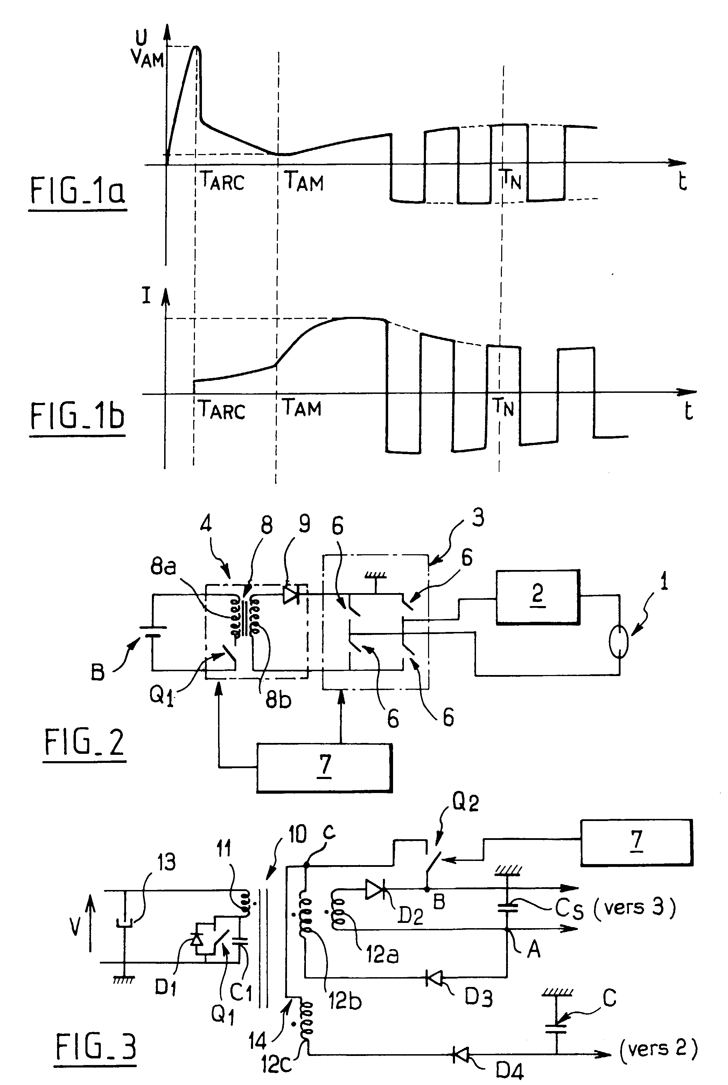

On a représenté sur les figures 1a et 1b la tension U et l'intensité I du courant d'une lampe à décharge de projecteur de véhicule automobile en fonction du temps t.

En régime nominal (à partir de T_{N}), une telle lampe est alimentée par des courants alternatifs de forme carrée à une fréquence de l'ordre de 200 Hz à 1 kHz selon les lampes. Ce fonctionnement alternatif permet, par rapport à un fonctionnement en continu, d'augmenter considérablement la durée de vie de la lampe.

L'intensité du courant est asservie de façon que la puissance fournie à la lampe soit maintenue à 35 W ± 1 W ; la tension est imposée par la lampe et varie au cours du fonctionnement en régime nominal entre 65 et 125 V.

Lors du démarrage de la lampe, on applique entre ses électrodes une impulsion d'amorçage haute tension V_{AM} (de l'ordre de 12 à 25 kV selon les lampes). Cette impulsion génère l'arc de la lampe (temps T_{ARC}). L'alimentation de la lampe est alors commandée pendant quelques centaines de microsecondes (jusqu'à T_{AM}) de façon que le courant dans la lampe ne s'annule pas, tandis que la tension de la lampe redescend aux environs de 30 V à 100 V en fonction de l'état précédent de la lampe.

Cette phase d'amorçage est ensuite suivie pendant une durée de l'ordre de 10 à 15 secondes (de T_{AM} jusqu'à T_{N}) par une phase de montée en puissance jusqu'à 90 Watts. Le courant I est alors limité à 2,6 A. Cette phase de montée en puissance est nécessaire pour chauffer les électrodes et évaporer les halogénures.

On a représenté schématiquement sur la figure 2 un circuit d'alimentation permettant un tel fonctionnement. La lampe à décharge, référencée par 1, y est montée en série avec un module 2 pour la génération de l'impulsion Haute Tension et est alimentée en tension par un convertisseur continu/alternatif 3 en aval d'un convertisseur continu/continu 4 recevant en entrée la tension (12 V) de la batterie B du véhicule.

Le convertisseur 3 continu/alternatif est un pont en H de quatre interrupteurs 6 commandés par une électronique de contrôle 7. Ces quatre interrupteurs 6 sont par exemple des transistors de type MOS.

Le convertisseur 4 continu/continu est par exemple un circuit de type dit "monoflyback" tel qu'illustré sur la figure 2. Un tel circuit comprend un transformateur 8 dont l'enroulement primaire 8a est monté, en série avec un interrupteur commandé Q1, aux bornes de la source de tension d'entrée (batterie B du véhicule par exemple), tandis que son enroulement secondaire 8b est monté en série avec une diode 9 aux bornes de la charge à alimenter. L'interrupteur Q1 est par exemple un transistor MOS dont la grille est commandée en tension par le module de contrôle 7.

L'enroulement secondaire 8b se charge tant que le transistor Q1 est fermé. Lorsque le transistor Q1 est ouvert, l'enroulement primaire 8a restitue l'énergie emmagasinée dans l'élément magnétique à la charge.

La tension de sortie est proportionnelle à la tension d'entrée dans un rapport qui dépend de tₒₙ/t_{off}, où tₒₙ et t_{off} sont respectivement les temps de fermeture et d'ouverture de l'interrupteur Q1.

Ce convertisseur continu/continu 4 génère toutes les tensions autres que celle de l'impulsion d'amorçage. En particulier, il doit être capable de fournir pour le démarrage une tension élevée de 500 V pendant plusieurs millisecondes.

EP-A-0 601 874 divulgue un convertisseur pour alimenter une lampe à décharge. Le convertisseur comprend un transformateur ayant un secondaire à prise intermédiaire pour fournir d'une part une tension de démarrage et d'autre part une tension d'alimentation en mode normal.

Les hautes tensions ne sont utiles que pendant de courtes durées, lors du démarrage, mais imposent aux composants du convertisseur, et en particulier à son interrupteur commandé, des dimensionnements très importants.

Or, on cherche actuellement à réduire considérablement l'encombrement des circuits d'alimentation des lampes à décharge de façon à pouvoir les loger totalement dans les projecteurs, alors que jusqu'à présent les convertisseurs des circuits d'alimentation étaient à l'extérieur des projecteurs.

Un but de l'invention est donc de proposer un convertisseur qui est d'une structure permettant d'alléger le dimensionnement de ses différents éléments.

A cet effet, l'invention propose un convertisseur de tension pour l'alimentation d'une lampe à décharge de projecteur de véhicule automobile, comportant un circuit primaire alimenté par une tension de type continu, telle que la tension de la batterie du véhicule, et un circuit secondaire qui est couplé par induction mutuelle avec le circuit primaire et qui délivre en sortie une tension pour l'alimentation de la lampe à décharge, caractérisé en ce que le circuit secondaire comporte deux branches montées en parallèle qui sont chacune couplées par induction mutuelle avec le circuit primaire et deux diodes montées de façon à éviter que l'une des branches ne se décharge dans l'autre, le rapport de transformation, par induction mutuelle avec le circuit primaire de l'une des deux branches, étant supérieur au rapport de transformation de l'autre, la branche de rapport de transformation le plus élevé comportant un interrupteur qui est commandé par une électronique de contrôle, de façon à être fermé tant que la tension de la lampe est supérieure à une tension seuil donnée et à être ouvert lorsque cette tension devient inférieure à ce seuil.

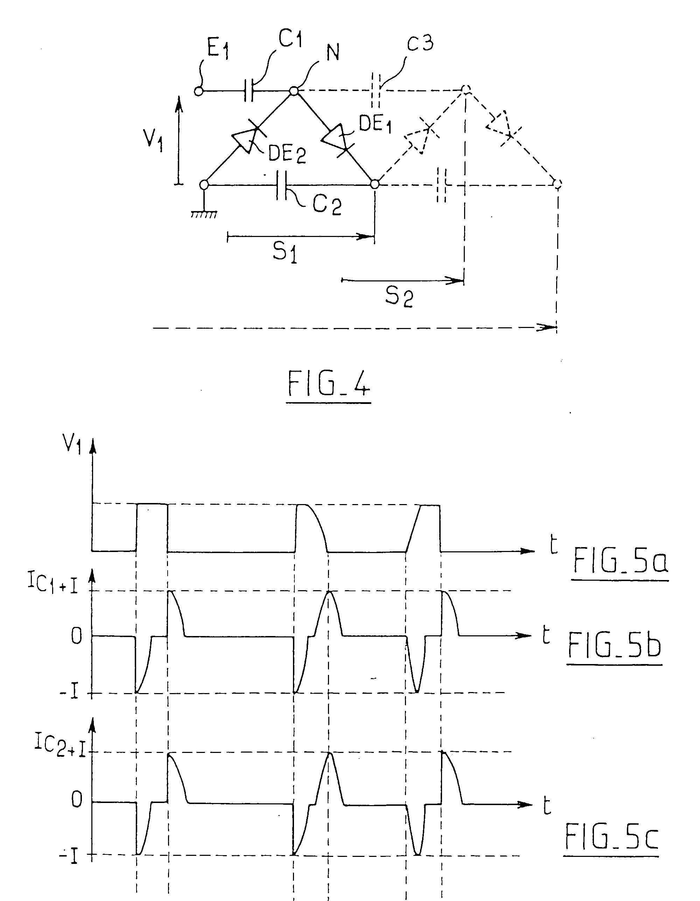

D'autres caractéristiques et avantages de l'invention ressortiront encore de la description qui suit. Cette description est purement illustrative et non limitative. Elle doit être lue en regard des dessins annexés sur lesquels :
. les figure 1a et 1b, déjà analysées, sont des graphes sur lesquels on a porté en fonction du temps la tension et l'intensité du courant d'alimentation d'une lampe à décharge de véhicule automobile en fonctionnement;
. la figure 2, également déjà analysée, est une représentation schématique d'un circuit d'alimentation de lampe à décharge ;
. la figure 3 est une représentation schématique d'un circuit convertisseur conforme à l'invention ;
. la figure 4 est une représentation schématique d'un montage complémentaire pour le circuit de la figure 3;
. les figures 5a à 5c illustrent la tension en entrée du montage de la figure 4, ainsi que les intensités dans les deux condensateurs du premier étage de ce montage.

Le convertisseur illustré sur la figure 3 est intégré dans un circuit d'alimentation du type de celui de la figure 2.

Il comporte un transformateur 10 qui présente un enroulement primaire 11 et deux branches montées en parallèle comportant chacune un enroulement secondaire, ces deux enroulements secondaires ayant été référencés par 12a et 12b.

L'enroulement primaire 11 est relié d'un côté à une source de tension V, qui est par exemple la batterie du véhicule montée en parallèle avec un alternateur 13. De l'autre côté, l'enroulement 11 est relié au neutre par l'intermédiaire d'un condensateur C1, d'une diode D1 et d'un interrupteur commandé Q1, montés en parallèle.

La diode D1 est reliée au neutre par son anode, ladite diode D1 étant conductrice du neutre vers l'enroulement primaire 11.

L'interrupteur Q1 est un transistor de type MOS, dont la tension de grille est commandée par l'électronique de contrôle 7, de façon à réguler la puissance fournie à la lampe. Dans ce cas, D₁ peut être une diode intégrée au boîtier MOS.

L'enroulement secondaire 12a est relié d'un côté à l'anode d'une diode D2, dont la cathode est reliée au neutre. De l'autre côté (point A), l'enroulement 12a est relié à une extrémité d'un condensateur Cs, dont l'autre extrémité est également reliée au neutre.

Le convertisseur 3 continu/alternatif alimenté par le convertisseur continu/continu selon l'invention qui est ici décrit, est monté en parallèle sur ce condensateur Cs.

L'enroulement secondaire 12b présente un rapport de transformation supérieur à celui de l'enroulement 12a (nombre de spires N2b de l'enroulement 12b supérieur au nombre de spires N2a de l'enroulement 12a). Cet enroulement 12b est relié d'un côté, par l'intermédiaire d'une diode D3, à l'extrémité du condensateur Cs non reliée au neutre (point A), la diode D3 étant passante du condensateur Cs vers l'enroulement secondaire 12b. A son autre extrémité, l'enroulement 12b est relié par un interrupteur commandé Q2 à un noeud B entre la diode D2 et la capacité Cₛ. Cet interrupteur Q2 est par exemple un transistor bipolaire NPN dont la base est alimentée en courant par l'électronique de contrôle 7.

Le circuit secondaire comporte en outre une troisième branche référencée par 14, qui comprend un enroulement inductif 12c qui est relié à un noeud C entre l'interrupteur Q2 et l'enroulement 12b. De l'autre côté, l'enroulement 12c est relié à la cathode d'une diode D4, dont l'anode est reliée, d'une part, à une entrée d'alimentation du module 2 de génération de l'impulsion d'amorçage et, d'autre part, à une extrémité d'un condensateur C dont l'autre extrémité est reliée au neutre.

Cette troisième branche 14 alimente le module Haute Tension pour la génération de l'impulsion d'amorçage de la lampe à décharge. La tension nécessaire à ce module pour l'amorçage est de 800 V.

Le fonctionnement de la structure de convertisseur qui vient d'être décrit est le suivant.

Lors de l'allumage de la lampe à décharge, l'électronique de contrôle 7 ferme l'interrupteur Q2.

Le nombre N2b de spires de l'enroulement secondaire 12b étant supérieur au nombre N2a de spires du secondaire 12a, de sorte que la diode D2 est bloquée et que le condensateur Cs se charge à +500 V.

C'est donc l'enroulement secondaire 12b qui fournit le courant d'alimentation lors de la phase d'amorçage de la lampe 1.

Simultanément, l'enroulement 12c génère une tension supérieure pour l'alimentation du module 2 de génération de l'impulsion Haute Tension.

Lorsque la tension de la lampe descend en dessous d'un seuil prédéterminé (de l'ordre de 150 V), l'électronique de contrôle 7 commande l'ouverture de l'interrupteur Q2. Ce seuil correspond à une tension supérieure à la tension lampe après l'amorçage (supérieure à la plage de fonctionnement nominal (68-125 V). C'est alors l'enroulement 12a qui alimente la lampe en courant.

Lorsque l'interrupteur Q2 est ouvert, le module 2 est également mis hors circuit.

Comme on l'aura compris, une telle structure permet de réduire la tension maximale à laquelle les éléments du primaire du convertisseur, et en particulier l'interrupteur Q1, sont soumis. Par exemple, les nombres de spires N2a et N2b peuvent être choisis de façon que l'interrupteur Q1 puisse être uniquement dimensionné pour supporter des tensions de l'ordre de 100 V ou inférieures, Q1 pouvant être par exemple un transistor MOS 60 V standard dans le domaine de l'automobile.

Par ailleurs, cette structure présente l'avantage de permettre de très bon rendement en puissance sur une très large gamme de tension.

Selon un autre aspect avantageux de l'invention, il est possible de simplifier le transformateur 10 en prévoyant sur la branche 14 qui alimentate le module 2 Haute Tension un montage multiplicateur de tension de type Schenkel tel que représenté sur la figure 4.

Les montages de type Schenkel sont classiquement connus en électronique d'alimentation. On pourra à cet égard avantageusement se référer à l'ouvrage : "Alimentations électroniques" - R. Damaye - C. Gagne-SECF Editions Radio - Paris, 1986.

Un tel montage comprend un ou plusieurs étages constitués chacun par un condensateur C1 monté entre une entrée E1 à laquelle est appliquée la tension V1 et un noeud N relié, d'une part, à la cathode d'une diode DE1 et, d'autre part, à l'anode d'une diode DE2. La cathode de la diode DE2 est reliée au neutre. Un condensateur C2 est monté entre le neutre et l'anode de la diode DE1.

On a illustré sur les figures 5a à 5c la tension V1 en entrée du montage, ainsi que les courants IC1 et IC2 dans chacun des deux condensateurs C1 et C2.

La tension S1 aux bornes du condensateur C2 est égale à deux fois la tension de crête de l'impulsion de départ V1 : le condensateur C2 se charge au front montant de l'impulsion de départ, à travers la diode DE1, ainsi qu'au front descendant, par décharge de C1 à travers la diode DE2.

Bien entendu, en complétant par d'autres étages, il est possible d'obtenir des rapports de multiplication supérieurs : sur la figure 4, la tension S₂ aux bornes du condensateur C3 de l'étage suivant est 3 fois V1.

Ainsi, il est possible avec un seul étage de générer la tension de 1 000 V nécessaire au module 2 pour la génération de l'impulsion Haute Tension.

Comme on l'aura compris, l'invention concerne également les projecteurs à lampe(s) à décharge dont les circuits d'alimentation comportent des convertisseurs du type de celui qui vient d'être décrit. Un tel projecteur comporte classiquement un réflecteur dans le fond duquel sont disposées la ou les lampes à décharge.

Les convertisseurs conformes à l'invention permettent un gain en encombrement pour de tels projecteurs.

En particulier, dans le cas d'un projecteur présentant un boîtier dans lequel est reçu le réflecteur, le convertisseur est avantageusement disposé, avec éventuellement l'ensemble du circuit d'alimentation, à l'intérieur dudit boîtier.

## Revendications

1. Convertisseur de tension pour l'alimentation d'une lampe à décharge (1) de projecteur de véhicule automobile, comportant un circuit primaire (11, Q1) alimenté par une tension (V) de type continu, telle que la tension de la batterie du véhicule, et un circuit secondaire (12a, D2 ; 12b, D3) qui est couplé par induction mutuelle avec le circuit primaire (11) et qui délivre en sortie une tension pour l'alimentation de la lampe à décharge, caractérisé en ce que le circuit secondaire comporte deux branches (12a ; 12b) montées en parallèle qui sont chacune couplées par induction mutuelle avec le circuit primaire (11) et deux diodes (D2, D3) montées de façon à éviter que l'une des branches ne se décharge dans l'autre, le rapport de transformation, par induction mutuelle avec le circuit primaire (11), de l'une (12b) des deux branches étant supérieur au rapport de transformation de l'autre (12a), la branche (12b) de rapport de transformation le plus élevé comportant un interrupteur (Q2) qui est commandé par une électronique de contrôle (7), de façon à être fermé tant que la tension de la lampe est supérieure à une tension seuil donnée et à être ouvert lorsque cette tension devient inférieure à ce seuil.

2. Convertisseur selon la revendication 1, caractérisé en ce qu'il comporte une troisième branche (14) reliée à un noeud (C) de la branche de rapport de transformation le plus élevé, cette troisième branche (14) alimentant le module Haute Tension pour la génération de l'impulsion d'amorçage de la lampe à décharge.

3. Convertisseur selon la revendication 2, caractérisé en ce que la troisième branche (14) comporte un élément inductif (12c) en série avec une diode (D4), un moyen capacitif (C) étant monté entre le noeud de sortie de cette troisième branche et le neutre.

4. Convertisseur selon l'une des revendications précédentes, caractérisé en ce que la troisième branche (14) comporte un montage multiplicateur de tension de type Schenkel.

5. Convertisseur selon l'une des revendications précédentes, caractérisé en ce qu'un moyen capacitif est monté en parallèle avec les deux branches couplées par induction mutuelle avec le circuit primaire.

6. Convertisseur selon l'une des revendications précédentes, caractérisé en ce que le circuit primaire comporte un interrupteur (Q1) commandé par une électronique de contrôle de façon à réguler la puissance fournie à la lampe.

7. Convertisseur selon l'une des revendications précédentes, caractérisé en ce que la branche (12b) de rapport de transformation le plus élevé est apte à fournir une tension de sortie de l'ordre de 500 V, la tension seuil étant de l'ordre de 150 V.

8. Circuit d'alimentation d'une lampe à décharge de projecteur de véhicule automobile caractérisé en ce qu'il comprend un convertisseur continu/continu (4) selon l'une des revendications précédentes, ainsi qu'un convertisseur continu/alternatif (3) interposé entre le convertisseur continu/continu (4) et la lampe à décharge (1).

9. Projecteur de véhicule automobile comportant un réflecteur, au moins une lampe à décharge disposée dans le fond dudit réflecteur, ainsi qu'un circuit assurant l'alimentation de la lampe à décharge, caractérisé en ce que ledit circuit comprend un convertisseur selon l'une des revendications 1 à 7.

10. Projecteur selon la revendication 9, comportant un boîtier dans lequel est reçu le réflecteur, caractérisé en ce que le convertisseur est disposé à l'intérieur du boîtier.

## Patentansprüche

1. Spannungswandler zur Speisung einer Entladungslampe (1) eines Kraftfahrzeugscheinwerfers, umfassend eine Primärschaltung (11, Q1), die durch eine Gleichspannung (V), etwa die Spannung der Fahrzeugbatterie, gespeist wird, und eine Sekundärschaltung (12a, D2; 12b, D3), die durch gegenseitige Induktion mit der Primärschaltung (11) gekoppelt ist und die ausgangsseitig eine Spannung zur Speisung der Entladungslampe liefert, **dadurch gekennzeichnet**, daß die Sekundärschaltung zwei parallelgeschaltete Stränge (12a; 12b), die jeweils durch gegenseitige Induktion mit der Primärschaltung (11) gekoppelt sind, und zwei Dioden (D2, D3) umfaßt, die so geschaltet sind, daß verhindert wird, daß sich einer der Stränge in den anderen entlädt, wobei das Übersetzungsverhältnis durch gegenseitige Induktion mit der Primärschaltung (11) eines (12b) der beiden Stränge größer als das Übersetzungsverhältnis des anderen (12a) ist, wobei der Strang (12b) mit dem größeren Übersetzungsverhältnis einen Schalter (Q2) umfaßt, der durch eine Kontrollelektronik (7) gesteuert wird, so daß er geschlossen ist, solange die Spannung der Lampe größer als eine gegebene Schwellenspannung ausfällt, und daß er geöffnet ist, wenn diese Spannung kleiner als diese Schwellenspannung wird.

2. Spannungswandler nach Anspruch 1, **dadurch gekennzeichnet** daß er einen dritten Strang (14) umfaßt, der mit einem Knotenpunkt (C) des Strangs mit dem größeren Übersetzungsverhältnis verbunden ist, wobei dieser dritte Strang (14) das Hochspannungsmodul zur Erzeugung des Zündimpulses der Entladungslampe speist.

3. Spannungswandler nach Anspruch 2, **dadurch gekennzeichnet** daß der dritte Strang (14) ein mit einer Diode (D4) in Reihe geschaltetes induktives Element (12c) umfaßt, wobei ein kapazitives Mittel (C) zwischen dem Ausgangsknotenpunkt dieses dritten Strangs und dem Nulleiter geschaltet ist.

4. Spannungswandler nach einem der vorangehenden Ansprüche, **dadurch gekennzeichnet,** daß der dritte Strang (14) eine Spannungsvervielfacher-Schaltung des Typs Schenkel umfaßt.

5. Spannungswandler nach einem der vorangehenden Ansprüche, **dadurch gekennzeichnet,** daß ein kapazitives Mittel mit den zwei Strängen parallelgeschaltet ist, die durch gegenseitige Induktion mit der Primärschaltung gekoppelt sind.

6. Spannungswandler nach einem der vorangehenden Ansprüche, **dadurch gekennzeichnet,** daß die Primärschaltung einen Schalter (Q1) umfaßt, der durch eine Kontrollelektronik gesteuert wird, um die an die Lampe abgegebene Leistung zu regeln.

7. Spannungswandler nach einem der vorangehenden Ansprüche, **dadurch gekennzeichnet,** daß der Strang (12b) mit dem größeren Übersetzungsverhältnis eine Ausgangsspannung in einer Größenordnung von 500 V liefern kann, wobei die Schwellenspannung in einer Größenordnung von 150 V liegt.

8. Speiseschaltung einer Entladungslampe eines Kraftfahrzeugscheinwerfers, **dadurch gekennzeichnet** daß sie einen Gleichspannungswandler (4) nach einem der vorangehenden Ansprüche sowie einen Gleich-/Wechselspannungswandler (3) umfaßt, der zwischen dem Gleichspannungswandler (4) und der Entladungslampe (1) eingefügt ist.

9. Kraftfahrzeugscheinwerfer, umfassend einen Reflektor, wenigstens eine im Boden des besagten Reflektors angeordnete Entladungslampe sowie eine Schaltung zur Speisung der Entladungslampe, **dadurch gekennzeichnet** daß die besagte Schaltung einen Spannungswandler nach einem der Ansprüche 1 bis 7 umfaßt.

10. Scheinwerfer nach Anspruch 9, umfassend ein Gehäuse, in dem der Reflektor aufgenommen ist, **dadurch gekennzeichnet** daß der Spannungswandler im Innern des Gehäuses angeordnet ist.

## Claims

1. A voltage converter for the supply of power to a motor vehicle headlight discharge lamp (1), comprising a primary circuit (11, Q1) supplied with a unidirectional voltage (V), such as the voltage from the battery of the vehicle, and a secondary circuit (12a, D2; 12b, D3) which is coupled by mutual induction with the primary circuit (11), and which delivers an output voltage for the supply of power to the discharge lamp, characterised in that the secondary circuit comprises two branches (12a; 12b) which are connected in parallel, and each of which is inductively coupled with the primary circuit (11), together with two diodes (D2, D3) which are so connected as to avoid discharge of one of the branches into the other, the transformation ratio of the inductive coupling of one (12b) of the two branches with the primary circuit (11) being greater than the transformation ratio of the other one (12a), the branch (12b) having the greater transformation ratio comprising an interrupter (Q2) which is controlled by electronic control means (7) in such a way as to be closed as long as the voltage in the lamp is greater than a given threshold voltage, and to be open when the said voltage becomes less than the said threshold.

2. A converter according to Claim 1, characterised in that it includes a third branch (14) connected to a node (C) of the branch having the greater transformation ratio, the said third branch (14) supplying the High Tension module with power for the generation of the starting pulse for the discharge lamp.

3. A converter according to Claim 2, characterised in that the third branch (14) includes an inductive element (12c) in series with a diode (D4), a capacitive means (C) being connected between the output node of the said branch and neutral.

4. A converter according to one of the preceding Claims, characterised in that the third branch (14) includes a voltage multiplier circuit of the Schenkel type.

5. A converter according to one of the preceding Claims, characterised in that a capacitive means is connected in parallel with the two branches that are coupled by mutual induction with the primary circuit.

6. A converter according to one of the preceding Claims, characterised in that the primary circuit includes an interrupter (Q1) which is controlled by an electronic control means in such a way as to regulate the power supplied to the lamp.

7. A converter according to one of the preceding Claims, characterised in that the branch (12b) having the higher transformation ratio is adapted to supply an output voltage of the order of 500 V, the threshold voltage being of the order of 150 V.

8. A power supply circuit for a motor vehicle headlight discharge lamp, characterised in that it includes a direct current/direct current converter (4) according to one of the preceding Claims, together with a direct current/alternating current converter (3) interposed between the direct current/direct current converter (4) and the discharge lamp (1).

9. A motor vehicle headlight including a reflector, at least one discharge lamp disposed in the base of the said reflector, and a circuit for supplying power to the discharge lamp, characterised in that the said circuit includes a converter according to one of Claims 1 to 7.

10. A headlight according to Claim 9, including a casing in which the reflector is received, characterised in that the converter is disposed inside the casing.
